# EUROPEAN PATENT APPLICATION

(11) **EP 4 488 802 A1**
(43) Date of publication of application: **08.01.2025**
(21) Application number: 24156832.8
(22) Date of filing: 09.02.2024
(51) Int. Cl.: G06F 3/01

(54) **CONTROL METHOD FOR INTELLIGENT EQUIPMENT, CENTRAL CONTROL EQUIPMENT AND STORAGE MEDIUM**

(30) Priority: 03.07.2023 CN 202310809043
(71) Applicant: Beijing Xiaomi Mobile Software Co., Ltd., Beijing 100085 (CN)
(72) Inventor: ZHANG, He, Beijing, 100085 (CN)
(74) Representative: Stöckeler, Ferdinand

(57) **Abstract**

A control method for intelligent equipment includes: determining a positional relationship between a control gesture and various intelligent equipment according to a depth image containing the control gesture and positional information of various intelligent equipment, wherein the control gesture is a gesture made by a user to control various intelligent equipment; and starting an equipment control operation on a target intelligent equipment based on the control gesture in response to determining that a positional relationship between the target intelligent equipment and the control gesture meets a preset condition.

## Description

### FIELD

The present invention relates to the technical field of artificial intelligence, and more particularly to a control method for intelligent equipment, central control equipment, and a storage medium.

### BACKGROUND

Intelligent equipment refers to various devices (such as audio and video device, lighting device, etc.) that can be coupled to the Internet, exchange information and communicate with the Internet, and provide users with intelligent services.

In the related art, intelligent equipment can be controlled by recognizing user gestures. For example, it can be preset that an intelligent TV is turned off when a fist gesture is recognized, and an intelligent electric fan is turned off when a palm gesture is recognized. If there are a plurality of intelligent devices in a room, each device must have a unique set of gestures, so that the intended device corresponding to a gesture can be controlled without accidentally controlling a different intelligent device. However, in the related art, one gesture can only control one operation of single intelligent equipment, and it is impossible to control different intelligent equipment with one gesture, causing a low gesture reuse rate.

### SUMMARY

Accordingly, embodiments of the present invention provide a control method for intelligent equipment, central control equipment, and a device.

According to a first aspect of the present invention, a control method for intelligent equipment is proposed. The control method includes: determining a positional relationship between a control gesture and various intelligent equipment according to a depth image containing the control gesture and positional information of various intelligent equipment, in which the control gesture is a gesture made by a user to control various intelligent equipment; and starting an equipment control operation on target intelligent equipment based on the control gesture in response to determining that a positional relationship between the target intelligent equipment and the control gesture meets a preset condition.

In combination with any of the embodiments of the present invention, the control gesture includes a first equipment control gesture for controlling an equipment operation. Starting the equipment control operation on the target intelligent equipment based on the control gesture includes: determining a first equipment control instruction corresponding to the first equipment control gesture; and sending the first equipment control instruction to the target intelligent equipment, to enable the target intelligent equipment to execute an operation corresponding to the first equipment control instruction.

In combination with any of the embodiments of the present invention, the control gesture includes an equipment determination gesture for determining the target intelligent equipment. Starting the equipment control operation on the target intelligent equipment based on the control gesture in response to determining that the positional relationship between the target intelligent equipment and the control gesture meets the preset condition, includes: determining intelligent equipment, of which a positional relationship with the equipment determination gesture meets the preset condition, as the target intelligent equipment; acquiring an image containing a second equipment control gesture for controlling an equipment operation; determining a second equipment control instruction corresponding to the second equipment control gesture; and sending the second equipment control instruction to the target intelligent equipment, to enable the target intelligent equipment to execute an operation corresponding to the second equipment control instruction.

In combination with any of the embodiments of the present invention, determining the positional relationship between the control gesture and various intelligent equipment according to the depth image containing the control gesture and the positional information of various intelligent equipment includes: determining a center point of the control gesture according to the depth image containing the control gesture; determining a centroid of each of various intelligent equipment according to the positional information of various intelligent equipment; and calculating an included angle between a spatial connection line connecting the center point of the control gesture with the centroid of each of various intelligent equipment and a plane where the control gesture is located.

In combination with any of the embodiments of the present invention, the preset condition includes that an included angle between a spatial connection line connecting the control gesture with the intelligent equipment and a plane where the control gesture is located is greater than a preset angle threshold.

According to a second aspect of the present invention, a control method for intelligent equipment is proposed. The control method includes: receiving an equipment control instruction sent by central control equipment, in which the equipment control instruction is sent by the central control equipment in response to determining that a positional relationship between the target intelligent equipment and a control gesture meets a preset condition; and executing an operation corresponding to the equipment control instruction based on the equipment control instruction.

In combination with any of the embodiments of the present invention, receiving the equipment control instruction sent by the central control equipment includes: receiving a first equipment control instruction sent by the central control equipment. The first equipment control instruction is sent by the central control equipment in response to determining that a positional relationship between the target intelligent equipment and a first equipment control gesture meets the preset condition, and the first equipment control gesture is a gesture for controlling an equipment operation.

In combination with any of the embodiments of the present invention, receiving the equipment control instruction sent by the central control equipment includes: receiving a second equipment control instruction sent by the central control equipment. The second equipment control instruction is sent by the central control equipment according to a second equipment control gesture for controlling an equipment operation, in response to determining that a positional relationship between the target intelligent equipment and an equipment determination gesture meets the preset condition, and the equipment determination gesture is configured to determine the target intelligent equipment.

According to a third aspect of the present invention, central control equipment is proposed. The central control equipment includes: an image acquisition device, a data processing device and a control device. The image acquisition device is configured to acquire a depth image containing a control gesture. The data processing device is configured to determine a positional relationship between the control gesture and various intelligent equipment according to the depth image containing the control gesture and positional information of various intelligent equipment, and send a notification message to the control device in response to determining that a positional relationship between a target intelligent equipment and the control gesture meets a preset condition, in which the control gesture is a gesture made by a user to control various intelligent equipment. The control device is configured to start an equipment control operation on the target intelligent equipment based on the control gesture after receiving the notification message sent by the data processing device.

In combination with any of the embodiments of the present invention, the image acquisition device is a structured light depth camera, the data processing device is a Raspberry Pi host, and the control device is a voice assistant.

In combination with any of the embodiments of the present invention, position information of various intelligent equipment is pre-stored in the central control equipment.

In combination with any of the embodiments of the present invention, a depth image of each of various intelligent equipment is acquired in real time by the image acquisition device, and positional information of each intelligent equipment is determined based on the depth image of each intelligent equipment.

In combination with any of the embodiments of the present invention, the central control equipment is configured to determine a center point of the control gesture according to the depth image containing the control gesture, determine a centroid of each of various intelligent equipment according to the positional information of various intelligent equipment, and calculate an included angle between a spatial connection line connecting the center point of the control gesture with the centroid of each intelligent equipment and a plane where the control gesture is located, wherein the included angle represents the positional relationship.

In combination with any of the embodiments of the present invention, the preset condition comprises that an included angle between a spatial connection line connecting the control gesture with the intelligent equipment and a plane where the control gesture is located is greater than a preset angle threshold.

According to a fourth aspect of the present invention, there is provided non-transitory computer-readable storage medium having stored therein an instruction that, when executed by a processor, performs steps of the control method for intelligent equipment according to any embodiment of the present invention.

The technical solutions according to the embodiments of the present invention include the following beneficial effects.

With the control method for intelligent equipment, the central control equipment, and the device according to the embodiments of the present invention, when there are a plurality of intelligent equipment, the target intelligent equipment can be determined based on the positional relationship between the control gesture and various intelligent equipment, and then the equipment control operation on the target intelligent equipment can be started based on the control gesture. Since the control method for intelligent equipment according to the embodiments of the present invention can first determine a control object of the control gesture based on the positional relationship between the control gesture and various intelligent equipment, the plurality of intelligent equipment can be controlled by the same gesture and the gesture reuse rate can be improved.

It is to be understood that both the foregoing general description and the following detailed description are merely illustrative and explanatory and do not limit the present invention.

### BRIEF DESCRIPTION OF THE DRAWINGS

The accompanying drawings, which are incorporated in and constitute a part of the description, illustrate embodiments consistent with the present invention and together with the description, serve to explain the principles of the invention.
Fig. 1 is a flowchart of a control method for intelligent equipment according to an embodiment of the present invention;
Fig. 2 is a schematic diagram of a palm key point according to an embodiment of the present invention;
Fig. 3 is a flowchart of another control method for intelligent equipment according to an embodiment of the present invention;
Fig. 4 is a flowchart of another control method for intelligent equipment according to an embodiment of the present invention;
Fig. 5 is a flowchart of another control method for intelligent equipment according to an embodiment of the present invention;
Fig. 6 is a schematic diagram of central control equipment according to an embodiment of the present invention;
Fig. 7 is a schematic diagram of a control device for intelligent equipment according to an embodiment of the present invention;
Fig. 8 is a schematic diagram of another control device for intelligent equipment according to an embodiment of the present invention;
Fig. 9 is a schematic diagram of an electronic device according to an embodiment of the present invention.

### DETAILED DESCRIPTION

Embodiments of the present invention are described in detail below, and examples of the embodiments are shown in accompanying drawings. Same or similar reference numerals from beginning to end indicate same or similar elements or elements having same or similar functions. The following embodiments described with reference to the accompanying drawings are exemplary and do not represent all possible embodiments consistent with the present invention. Rather, they are merely examples of devices and methods consistent with some aspects of the present invention as detailed in the appended claims.

Terms in the present invention are merely used to describe specific embodiments and are not intended to limit the present invention. Singular forms "a/an", "said" and "the" used in the present invention and the appended claims are also intended to include plural forms, unless clearly specified otherwise. It should also be understood that the term "and/or" as used herein refers to and includes any or all possible combinations of one or more associated listed items.

It should be understood that although terms such as "first", "second", and "third" may be used to describe various information in the present invention, these information should not be limited to these terms. These terms are only used to distinguish information of the same type from each other. For example, without departing from the scope of the present invention, first information may also be called second information, and similarly, second information may also be called first information. As used herein, the term "if' may be construed to mean "when" or "upon" or "in response to determining", depending on the context.

Intelligent equipment refer to various kinds of equipment that can be coupled to the Internet, exchange information and communicate with the Internet, and provide users with intelligent services.

In the related art, intelligent equipment can be controlled by recognizing a user gesture through a camera. However, in the related art, it is impossible to determine which intelligent equipment the user wants to control with the gesture when there are a plurality of intelligent equipment. Therefore, the one-to-one correspondence between gestures and equipment operations needs to be pre-set, so that the equipment corresponding to the gesture can be controlled to perform a corresponding operation after recognizing the gesture. For example, it can be preset to control an intelligent TV to perform a turn-off operation when a fist gesture is recognized and control an intelligent electric fan to perform a turn-off operation when a scissor gesture is recognized.

In short, in the related art, one gesture can only control one operation of single intelligent equipment, and it is impossible to control different intelligent equipment with one gesture, causing a low gesture reuse rate.

Accordingly, the present invention provides a control method for intelligent equipment. In this control method, a control object of a control gesture can be determined based on a positional relationship between the control gesture and various intelligent equipment, so that the same gesture can be used to control a plurality of intelligent equipment, improving a gesture reuse rate.

The control method for intelligent equipment according to embodiments of the present invention will be described in detail with reference to the accompanying drawings.

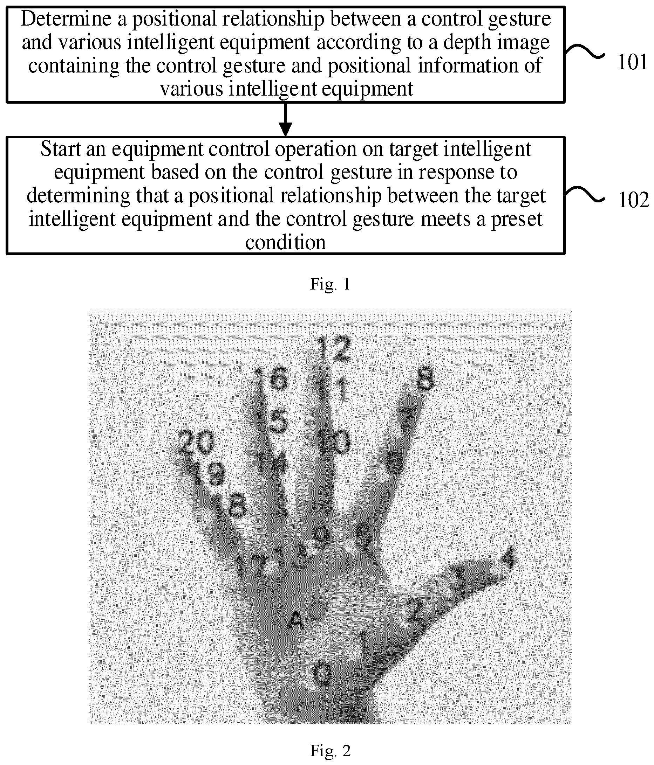

Fig. 1 is a flowchart of a control method for intelligent equipment according to an embodiment of the present invention, which can be executed by central control equipment. The control method for intelligent equipment is described in detail by an example of the intelligent equipment in an intelligent home scene. As shown in Fig. 1, the control method according to the embodiment includes the following steps.

In step 101, a positional relationship between a control gesture and various intelligent equipment is determined according to a depth image containing the control gesture and positional information of various intelligent equipment.

The control gesture is a gesture made by a user to control various intelligent equipment. In specific implementations, the central control equipment can be placed in a certain position in the home scene, and for example, it can be placed in a positional with a good visual field to acquire the depth image containing the control gesture as comprehensively as possible. For example, the central control equipment can use its own structured light depth camera to acquire a depth image containing the control gesture. The central control equipment can be an electronic device integrated with an image acquisition device, a data processing device and a control device. For example, the image acquisition device can be a structured light depth camera, the data processing device can be a Raspberry Pi host, and the control device can be a voice assistant, such as Xiaoai Tongxue (an artificial intelligence speaker released by Xiaomi Company).

The position information of the intelligent equipment can be pre-stored in the central control equipment. Alternatively, the central control equipment can use its own structured light depth camera to acquire the depth image of each intelligent equipment in real time, and determine the positional information of each intelligent equipment based on the depth image of each intelligent equipment. The present invention does not limit the way to obtain the position information of each intelligent equipment. In the intelligent home scene, the intelligent equipment can include: intelligent TV, intelligent electric fan, intelligent electric light, etc.

After the central control equipment obtains the depth image containing the control gesture and the positional information of each intelligent equipment, it can further determine the positional relationship between the control gesture and each intelligent equipment.

In an embodiment, the central control equipment can first determine a center point of the control gesture according to the depth image containing the control gesture. Then, according to the positional information of each intelligent equipment, a centroid of each of various intelligent equipment is determined. Finally, an included angle between a spatial connection line connecting the center point of the control gesture with the centroid of each intelligent equipment and a plane where the control gesture is located is calculated, and the included angle is the above positional relationship.

For example, when the control gesture is "palm", the central control equipment can detect each key point of the "palm" based on the depth image by using the gesture key point detection algorithm, and the detection result can be shown in Fig. 2. Then, the central control equipment can connect the key points with the key points numbered 0, 5 and 17 in Fig. 2 to obtain a spatial triangle, and determine the center point of the spatial triangle, which is the center point A of the control gesture "palm". Alternatively, the central control equipment can connect the key points with key points code 0 and 9 in Fig. 2 to obtain a space line segment, and determine the midpoint of the space line segment, which is the center point A of the control gesture "palm".

Similar to the above, the central control equipment can determine the centroid of each intelligent equipment based on the pre-stored positional information of each intelligent equipment or the depth image containing each intelligent equipment obtained by the structured light depth camera in real time. In this example, the centroid of the above-mentioned intelligent TV, intelligent electric fan, intelligent electric lamp, etc. is determined.

The depth information of each point in the image can be obtained by the structured light depth camera, so the central control equipment can obtain the spatial three-dimensional coordinates of several key points on the control gesture "palm" and the spatial three-dimensional coordinates of the centroid of each intelligent equipment. Based on the above three-dimensional coordinates, the central control equipment can further calculate the included angle between the connection line connecting the center point of the control gesture "palm" with the centroid of each intelligent equipment and the plane where the control gesture "palm" is located, which can be used to characterize the positional relationship between the control gesture "palm" and each intelligent equipment.

In step 102, an equipment control operation on target intelligent equipment based on the control gesture is started in response to determining that a positional relationship between the target intelligent equipment and the control gesture meets a preset condition.

In an embodiment, the preset condition may be that the included angle between the spatial connection line connecting the control gesture with the intelligent equipment and the plane where the control gesture is located is greater than a preset angle threshold.

In the example where the control gesture is "palm", when the user points the "palm" towards intelligent equipment, the spatial connection line connecting the centroid of the intelligent equipment with the center point of the "palm" should be perpendicular to the plane of the "palm". Based on this principle, in this example, intelligent equipment can be determined as the target intelligent equipment in response to determining that the included angle between the spatial connection line connecting the centroid of the intelligent equipment with the center point of the palm and the plane where the palm is located is greater than the preset angle threshold. The preset angle threshold can be 80 degrees or 85 degrees, which can be set by the relevant staff based on the actual situation, which is not limited by the present invention. Then, the central control equipment can further start the equipment control operation for the determined target intelligent equipment based on the "palm".

For example, in practical applications, when the preset angle threshold is 85 degrees and it is determined that the included angle between the connection line connecting the centroid of each of various intelligent equipment with the center point of the palm and the plane where the palm is located is greater than 85 degrees, the intelligent equipment corresponding to the included angle closest to 90 degrees can be determined as the target intelligent equipment.

It should be noted that in the above example, the control gesture is taken as the palm, but in practical applications, the control gesture can also be a fist gesture, a scissor gesture, etc., which is not limited by the present invention.

In the control method for intelligent equipment according to the embodiments of the present invention, when there are a plurality of intelligent equipment, the target intelligent equipment can be determined based on the positional relationship between the control gesture and each intelligent equipment, and then the equipment control operation on the target intelligent equipment can be started based on the control gesture. Because the control method for intelligent equipment according to the embodiments of the present invention can first determine the control object of the control gesture based on the positional relationship between the control gesture and each intelligent equipment, it is possible to control a plurality of intelligent equipment with the same gesture, thereby improving the gesture reuse rate.

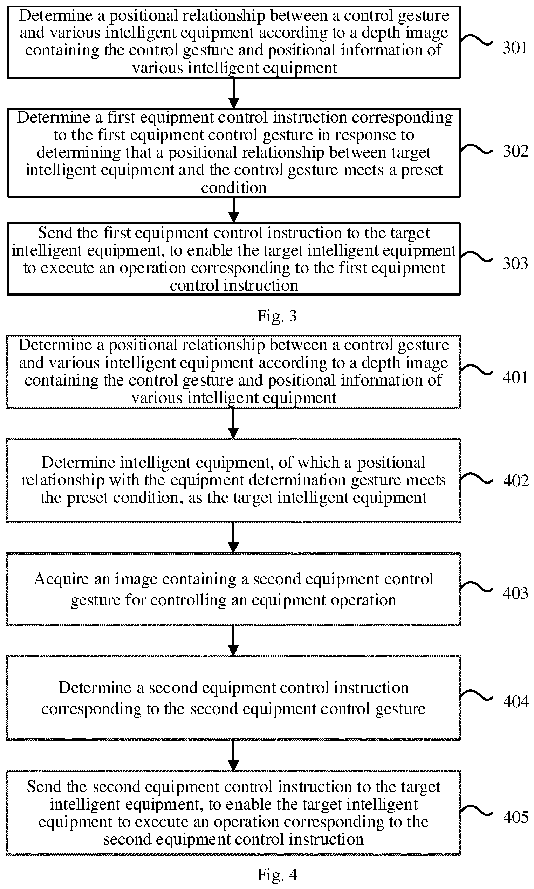

Fig. 3 is a flowchart of another control method for intelligent equipment according to an embodiment of the present invention. In the description of this embodiment, the same steps as those in any of the previous embodiments will be briefly described and will not be detailed again. For details, please refer to any of the previous embodiments. As shown in Fig. 3, the control method according to this embodiment includes the following steps.

In step 301, a positional relationship between a control gesture and various intelligent equipment is determined according to a depth image containing the control gesture and positional information of various intelligent equipment. The control gesture is a gesture made by a user to control various intelligent equipment. The control gesture includes a first equipment control gesture for controlling an equipment operation. For example, the first equipment control gesture may be a fist gesture.

In step 302, the first equipment control instruction corresponding to the first equipment control gesture is determined in response to determining that a positional relationship between a target intelligent equipment and the control gesture meets a preset condition. After the central control equipment determines the target intelligent equipment that meets the preset condition, such as an intelligent TV, it can further determine the first equipment control instruction corresponding to the first equipment control gesture. In this example, the first equipment control instruction corresponding to the fist gesture is determined. For example, the first equipment control instruction may be turning off.

In step 303, the first equipment control instruction is sent to the target intelligent equipment, so that the target intelligent equipment executes an operation corresponding to the first equipment control instruction.

In this example, after the central control equipment determines that the control instruction of the first device is "turning off', it can send "turning off" to the above-mentioned intelligent TV, so that the intelligent TV can perform an "turning off" operation.

For example, in response to determining that the target intelligent equipment is an intelligent electric fan, the central control equipment may send a "turning off" instruction to the intelligent electric fan, so that the intelligent electric fan performs a "turning off" operation. That is to say, by using the control method according to the embodiment of the present invention, it is possible to control the device to execute the corresponding operation on which the user's control gesture points, thereby achieving the effect of controlling a plurality of intelligent equipment with the same gesture.

In the control method for intelligent equipment according to the embodiments of the present invention, the central control equipment can complete the determination of the target intelligent equipment and the equipment control instruction based on a gesture, which can simplify the operation of the user and improve the use experience of the user.

Fig. 4 is a flowchart of another control method for intelligent equipment according to an embodiment of the present invention. As shown in Fig. 4, the control method according to this embodiment includes the following steps.

In step 401, a positional relationship between a control gesture and various intelligent equipment is determined according to a depth image containing the control gesture and positional information of various intelligent equipment.

The control gesture is a gesture made by a user to control the intelligent equipment. The control gesture includes an equipment determination gesture for determining a target intelligent equipment. For example, the equipment determination gesture may be a "palm" gesture.

In this example, the central control equipment can determine the positional relationship between the "palm" and each intelligent equipment based on the depth image containing the user's palm and the positional information of each intelligent equipment.

In step 402, an intelligent equipment, of which a positional relationship with the equipment determination gesture meets the preset condition, is determined as the target intelligent equipment.

The preset condition may be an included angle between a spatial connection line connecting the control gesture with the intelligent equipment and the plane where the control gesture is located is greater than a preset angle threshold. The preset angle threshold can be 80 degrees or 85 degrees, which is not limited by the present invention. For example, the target intelligent equipment may be an intelligent electric fan.

In step 403, an image containing a second equipment control gesture for controlling an equipment operation is acquired.

After the central control equipment determines that the target intelligent equipment is an intelligent electric fan based on the aforementioned "palm", it can continue to acquire an image containing a second equipment control gesture for controlling the equipment operation. For example, the second equipment control gesture may be a "fist-clenching" gesture.

In step 404, a second equipment control instruction corresponding to the second equipment control gesture is determined.

Based on the image, the central control equipment can determine the second equipment control instruction corresponding to the second equipment control gesture. In this example, the second equipment control instruction corresponding to the aforementioned "fist-clenching" gesture is determined. For example, the second equipment control instruction may be "turning on".

In step 405, the second equipment control instruction is sent to the target intelligent equipment, so that the target intelligent equipment executes an operation corresponding to the second equipment control instruction.

In this example, the central control equipment can send "turning on" to the aforementioned intelligent electric fan, so that the intelligent electric fan can perform an "turning on" operation.

In the control method for intelligent equipment according to the embodiments of the present invention, the central control equipment can determine the target intelligent equipment based on the special equipment determination gesture, and then determine the equipment control instruction for the target intelligent equipment based on the equipment control gesture, which is more flexible and can also achieve the effect of using the same gesture to control various intelligent equipment and improve the gesture reuse rate.

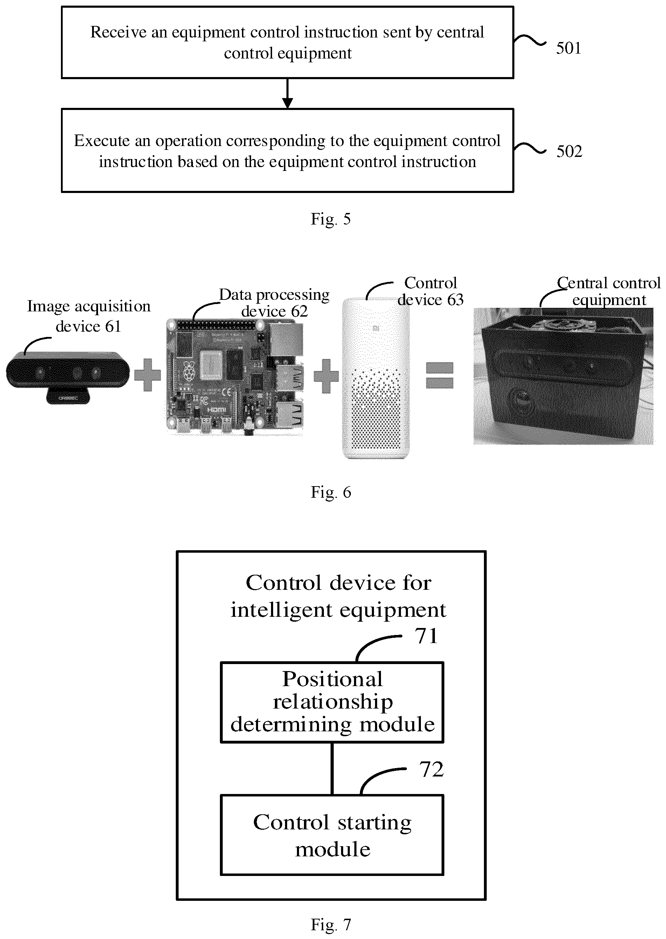

Fig. 5 is a flowchart of a control method for intelligent equipment according to an embodiment of the present invention, which can be executed by a target intelligent equipment. As shown in Fig. 5, the control method according to this embodiment includes the following steps.

In step 501, an equipment control instruction sent by a central control equipment is received.

The equipment control instruction is sent by the central control equipment in response to determining that the positional relationship between the target intelligent equipment and the control gesture meets a preset condition.

In step 502, an operation corresponding to the equipment control instruction is executed based on the equipment control instruction.

In the control method for intelligent equipment according to the embodiments of the present invention, the target intelligent equipment can perform corresponding operations based on the received equipment control instruction sent by the central control equipment. Compared with the existing method that requires the intelligent equipment to acquire the image containing the control gesture and then identify the equipment control instruction corresponding to the control gesture, the calculation amount of the target intelligent equipment side can be reduced.

In an embodiment, receiving the equipment control instruction sent by the central control equipment may include: receiving a first equipment control instruction sent by the central control equipment. The first equipment control instruction is sent by the central control equipment in response to determining that a positional relationship between the target intelligent equipment and a first equipment control gesture meets the preset condition, and the first equipment control gesture is a gesture for controlling an equipment operation.

In the control method for intelligent equipment according to embodiments of the present invention, the central control equipment can complete the determination of the target intelligent equipment and the equipment control instruction based on a gesture, which can simplify the operation of the user and improve the use experience of the user.

In another embodiment, receiving the equipment control instruction sent by the central control equipment includes: receiving a second equipment control instruction sent by the central control equipment. The second equipment control instruction is sent by the central control equipment according to a second equipment control gesture for controlling an equipment operation, in response to determining that a positional relationship between the target intelligent equipment and an equipment determination gesture meets the preset condition, and the equipment determination gesture is configured to determine the target intelligent equipment.

In the control method for intelligent equipment provided by embodiments of the present invention, the central control equipment can determine the target intelligent equipment based on the special equipment determination gesture, and then determine the equipment control instruction for the target intelligent equipment based on the equipment control gesture, which is more flexible and can also achieve the effect of using the same gesture to control various intelligent equipment and improve the gesture reuse rate.

Fig. 6 is a schematic diagram of central control equipment according to an embodiment of the present invention. The central control equipment is configured to execute the control method for intelligent equipment of any embodiments of the present invention. As shown in Fig. 6, the central control equipment may include: an image acquisition device 61, a data processing device 62, and a control device 63. The image acquisition device 61 is configured to acquire a depth image containing a control gesture. In practical applications, the image acquisition device 61 can be, for example, a structured light depth camera.

The data processing device 62 is configured to determine a positional relationship between the control gesture and various intelligent equipment according to the depth image containing the control gesture and positional information of various intelligent equipment, and send a notification message to the control device in response to determining that a positional relationship between a target intelligent equipment and the control gesture meets a preset condition. The control gesture is a gesture made by a user to control various intelligent equipment. The data processing device 62 may be, for example, a Raspberry Pi host that is designed for learning computer programming education and is a microcomputer only with the size of a credit card.

The control device 63 is configured to start an equipment control operation on the target intelligent equipment based on the control gesture after receiving the notification message sent by the data processing device. In practical applications, the control device 63 can be a voice assistant.

For the sake of simple description, all the aforementioned method embodiments are expressed as a series of action combinations, but those skilled in the art should understand that the present invention is not limited by the described action sequences, since some steps can be performed in other sequences or simultaneously according to the present invention.

Moreover, those skilled in the art should also understand that the embodiments described in the specification are all optional embodiments, and the actions and modules involved are not necessarily essential for the present invention.

Corresponding to the aforementioned embodiment of the application function realization method, the present invention also provides an embodiment of an application function realization device and a corresponding terminal.

Fig. 7 is a schematic diagram of a control device for intelligent equipment according to an embodiment of the present invention. As shown in Fig. 7, the control device for intelligent equipment may include: a positional relationship determining module 71 configured to determine a positional relationship between a control gesture and various intelligent equipment according to a depth image containing the control gesture and positional information of various intelligent equipment, in which the control gesture is a gesture made by a user to control various intelligent equipment; and a control starting module 72 configured to start an equipment control operation on a target intelligent equipment based on the control gesture in response to determining that a positional relationship between the target intelligent equipment and the control gesture meets a preset condition.

Optionally, the control gesture includes a first equipment control gesture for controlling the equipment operation.

The control starting module 72, when used to start the equipment control operation on the target intelligent equipment based on the control gesture, includes determining a first equipment control instruction corresponding to the first equipment control gesture, and sending the first equipment control instruction to the target intelligent equipment, to enable the target intelligent equipment to execute an operation corresponding to the first equipment control instruction.

Optionally, the control gesture includes an equipment determination gesture for determining the target intelligent equipment.

The control starting module 72, when used to start the equipment control operation on the target intelligent equipment based on the control gesture in response to determining that the positional relationship between the target intelligent equipment and the control gesture meets the preset condition, includes: determining an intelligent equipment, of which a positional relationship with the equipment determination gesture meets the preset condition, as the target intelligent equipment; acquiring an image containing a second equipment control gesture for controlling an equipment operation; determining a second equipment control instruction corresponding to the second equipment control gesture; and sending the second equipment control instruction to the target intelligent equipment, to enable the target intelligent equipment to execute an operation corresponding to the second equipment control instruction.

Optionally, when the positional relationship determining module 71 is used to determine the positional relationship between the control gesture and each intelligent equipment according to the depth image containing the control gesture and the positional information of each intelligent equipment, it includes determining the center point of the control gesture according to the depth image containing the control gesture, determining the centroid of each intelligent equipment according to the positional information of each intelligent equipment, respectively calculating the included angle between the spatial connection line connecting the center point of the control gesture with the centroid of each intelligent equipment and the plane where the control gesture is located.

Optionally, the preset condition includes that an included angle between a spatial connection line connecting the control gesture with the intelligent equipment and a plane where the control gesture is located is greater than a preset angle threshold.

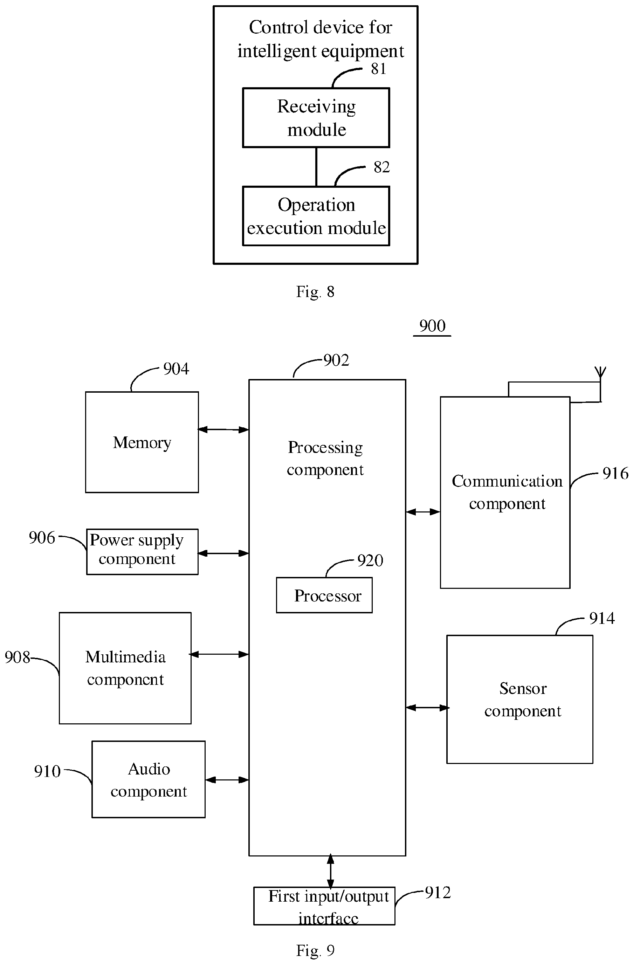

Fig. 8 is a schematic diagram of another control device for intelligent equipment according to an embodiment of the present invention. As shown in Fig. 8, the control device of intelligent equipment may include: a receiving module 81 configured to receive an equipment control instruction sent by central control equipment, in which the equipment control instruction is sent by the central control equipment in response to determining that a positional relationship between the target intelligent equipment and a control gesture meets a preset condition; and an operation execution module 82 configured to execute an operation corresponding to the equipment control instruction based on the equipment control instruction.

Optionally, the receiving module 81, when used for receiving the equipment control instruction sent by the central control equipment, includes: receiving a first equipment control instruction sent by the central control equipment. The first equipment control instruction is sent by the central control equipment in response to determining that the positional relationship between the target intelligent equipment and the first equipment control gesture meets a preset condition; and the first equipment control gesture is a gesture for controlling the equipment operation.

Optionally, the receiving module 81, when used to receive the equipment control instruction sent by the central control equipment, includes: receiving a second equipment control instruction sent by the central control equipment. The second equipment control instruction is sent by the central control equipment according to a second equipment control gesture for controlling an equipment operation, in response to determining that a positional relationship between the target intelligent equipment and an equipment determination gesture meets the preset condition, and the equipment determination gesture is configured to determine the target intelligent equipment.

The device embodiments basically corresponds to the method embodiments, and hence can refer to the relevant description about the method embodiments. The device embodiments described above are only illustrative. The units described above as separate components may or may not be physically separated, and the components displayed as units may or may not be physical units, that is, they may be located in one place or distributed to a plurality of network units. Some or all of the modules can be selected according to actual needs to achieve the purpose of the disclosed scheme. Ordinary technicians in this field can understand and implement it without inventive labor.

Correspondingly, embodiments of the invention provide an electronic device, including a processor and a memory for storing an instruction executable by the processor. The processor is configured to perform steps of the control method for intelligent equipment according to any embodiment of the present invention.

Fig. 9 is a structural diagram of an electronic device 900 according to an embodiment. For example, the electronic device 900 may be central control equipment, and specifically may be a server.

Referring to Fig. 9, an electronic device 900 may include one or more of the following components: a processing component 902, a memory 904, a power supply component 906, a multimedia component 908, an audio component 910, an input/output (I/O) interface 912, a sensor component 914, and a communication component 916.

The processing component 902 generally controls the overall operation of the electronic device 900, such as operations associated with display, telephone call, data communication, camera operation and recording operation. The processing component 902 may include one or more processors 920 to execute instructions to complete all or part of the steps of the method described above. In addition, the processing component 902 can include one or more modules to facilitate the interaction between the processing component 902 and other components. For example, the processing component 902 can include a multimedia module to facilitate interaction between the multimedia component 908 and the processing component 902.

The memory 904 is configured to store various types of data to support operations at the device 900. Examples of these data include instructions for any application or method operating on the electronic device 900, contact data, phone book data, messages, pictures, videos, and the like. The memory 904 can be realized by any type of volatile or nonvolatile memory device or their combination, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk or optical disk.

The power supply component 906 provides power to various components of the electronic device 900. The power supply component 906 may include a power management system, one or more power supplies, and other components associated with generating, managing and distributing power for the electronic device 900.

The multimedia component 908 includes a screen that provides an output interface between the electronic device 900 and the user. In some embodiments, the screen may include a liquid crystal display (LCD) and a touch panel (TP). If the screen includes a touch panel, the screen may be implemented as a touch screen to receive an input signal from a user. The touch panel includes one or more touch sensors to sense touch, sliding and gestures on the touch panel. The touch sensor can not only sense the boundary of the touch or sliding action, but also detect the duration and pressure related to the touch or sliding operation. In some embodiments, the multimedia component 908 includes a front camera and/or a rear camera. When the electronic device 900 is in an operation mode, such as a shooting mode or a video mode, the front camera and/or the rear camera can receive external multimedia data. Each front camera and rear camera can be a fixed optical lens system or have focal length and optical zoom capability.

The audio component 910 is configured to output and/or input audio signals. For example, the audio component 910 includes a microphone (MIC) configured to receive external audio signals when the electronic device 900 is in an operation mode, such as a call mode, a recording mode and a voice recognition mode. The received audio signal may be further stored in the memory 904 or transmitted via the communication component 916. In some embodiments, the audio component 910 further includes a speaker for outputting audio signals.

I/O interface 912 provides an interface between processing component 902 and peripheral interface modules, which can be keyboards, clickwheels, buttons, etc. These buttons may include, but are not limited to, home button, volume button, start button and lock button.

The sensor component 914 includes one or more sensors for providing various aspects of the status assessment for the electronic device 900. For example, the sensor component 914 can detect the open/closed state of the electronic device 900, the relative position of components, such as the display and keypad of the electronic device 900, the positional change of the electronic device 900 or a component of the electronic device 900, the presence or absence of contact between the user and the electronic device 900, the orientation or acceleration/deceleration of the electronic device 900 and the temperature change of the electronic device 900. The sensor component 914 may include a proximity sensor configured to detect the presence of a nearby object without any physical contact. The sensor component 914 may also include an optical sensor, such as a CMOS or CCD image sensor, for use in imaging applications. In some embodiments, the sensor component 914 may further include an acceleration sensor, a gyro sensor, a magnetic sensor, a pressure sensor or a temperature sensor.

The communication component 916 is configured to facilitate wired or wireless communication between the electronic device 900 and other devices. The electronic device 900 can access a wireless network based on communication standards, such as WiFi, 4G or 5G, 4G LTE, 5G NR or their combination. In an embodiment, the communication component 916 receives a broadcast signal or broadcast related information from an external broadcast management system via a broadcast channel. In an embodiment, the communication component 916 further includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an embodiment, the electronic device 900 may be implemented by one or more application specific integrated circuits (ASIC), digital signal processors (DSP), digital signal processing devices (DSPD), programmable logic devices (PLD), field programmable gate arrays (FPGA), controllers, microcontrollers, microprocessors or other electronic components for performing the above-mentioned methods.

In an embodiment, there is also provided a non-transitory computer-readable storage medium, such as the memory 904 including instructions, which, when executed by the processor 920 of the electronic device 900, enable the electronic device 900 to perform the control method for intelligent equipment of any embodiments of the present invention.

The non-transitory computer-readable storage medium can be ROM, random access memory (RAM), CD-ROM, magnetic tape, floppy disk, optical data storage device, etc.

Other embodiments of the present invention will easily occur to those skilled in the art after considering the specification and practicing the present invention. The present invention is intended to cover any variations, uses or adaptations of the present invention, which follow the general principles of the present invention and include common sense or common technical means in this technical field that are not disclosed in the present disclosure. The specification and examples are to be regarded as illustrative only, with the true scope of the invention being indicated by the following claims.

It should be understood that the present invention is not limited to the precise structures described above and shown in the drawings, and various modifications and changes can be made without departing from the scope of the present invention, which is limited only by the appended claims.

## Claims

1. A control method for intelligent equipment, the control method being executed by central control equipment and the control method comprising:
Determining (101, 301, 401) a positional relationship between a control gesture and various intelligent equipment according to a depth image containing the control gesture and positional information of various intelligent equipment, wherein the control gesture is a gesture made by a user to control various intelligent equipment; and
starting (102) an equipment control operation on a target intelligent equipment based on the control gesture in response to determining that a positional relationship between the target intelligent equipment and the control gesture meets a preset condition.

2. The control method according to claim 1, wherein:
the control gesture comprises a first equipment control gesture for controlling an equipment operation; and
starting (102) the equipment control operation on the target intelligent equipment based on the control gesture in response to determining that the positional relationship between the target intelligent equipment and the control gesture meets the preset condition comprises:
determining (302) a first equipment control instruction corresponding to the first equipment control gesture; and
sending (303) the first equipment control instruction to the target intelligent equipment, to enable the target intelligent equipment to execute an operation corresponding to the first equipment control instruction.

3. The control method according to claim 1 or 2, wherein:
the control gesture comprises an equipment determination gesture for determining the target intelligent equipment; and
starting (102) the equipment control operation on the target intelligent equipment based on the control gesture in response to determining that the positional relationship between the target intelligent equipment and the control gesture meets the preset condition, comprises:
determining (402) intelligent equipment, of which a positional relationship with the equipment determination gesture meets the preset condition, as the target intelligent equipment;
acquiring (403) an image containing a second equipment control gesture for controlling an equipment operation;
determining (404) a second equipment control instruction corresponding to the second equipment control gesture; and
sending (405) the second equipment control instruction to the target intelligent equipment, to enable the target intelligent equipment to execute an operation corresponding to the second equipment control instruction.

4. The control method according to any one of claims 1 to 3, wherein determining the positional relationship between the control gesture and various intelligent equipment according to the depth image containing the control gesture and the positional information of various intelligent equipment comprises:
determining a center point of the control gesture according to the depth image containing the control gesture;
determining a centroid of each of various intelligent equipment according to the positional information of various intelligent equipment; and
calculating an included angle between a spatial connection line connecting the center point of the control gesture with the centroid of each of various intelligent equipment and a plane where the control gesture is located.

5. The control method according to any one of claims 1 to 4, wherein the preset condition comprises that an included angle between a spatial connection line connecting the control gesture with the target intelligent equipment and a plane where the control gesture is located is greater than a preset angle threshold.

6. A control method for intelligent equipment, the control method being executed by a target intelligent equipment and the control method comprising:
receiving (501) an equipment control instruction sent by central control equipment (501), wherein the equipment control instruction is sent by the central control equipment in response to determining that a positional relationship between the target intelligent equipment and a control gesture meets a preset condition; and
executing (502) an operation corresponding to the equipment control instruction based on the equipment control instruction.

7. The control method according to claim 6, wherein receiving (501) the equipment control instruction sent by the central control equipment comprises:
receiving a first equipment control instruction sent by the central control equipment,
wherein the first equipment control instruction is sent by the central control equipment in response to determining that a positional relationship between the target intelligent equipment and a first equipment control gesture meets the preset condition, and the first equipment control gesture is a gesture for controlling an equipment operation.

8. The control method according to claim 6 or 7, wherein receiving (501) the equipment control instruction sent by the central control equipment comprises:
receiving a second equipment control instruction sent by the central control equipment,
wherein the second equipment control instruction is sent by the central control equipment according to a second equipment control gesture for controlling an equipment operation, in response to determining that a positional relationship between the target intelligent equipment and an equipment determination gesture meets the preset condition, and the equipment determination gesture is configured to determine the target intelligent equipment.

9. Central control equipment, comprising an image acquisition device (61), a data processing device (62) and a control device (63), wherein:
the image acquisition device (61) is configured to acquire a depth image containing a control gesture;
the data processing device (62) is configured to determine a positional relationship between the control gesture and various intelligent equipment according to the depth image containing the control gesture and positional information of various intelligent equipment, and send a notification message to the control device (63) in response to determining that a positional relationship between a target intelligent equipment and the control gesture meets a preset condition, wherein the control gesture is a gesture made by a user to control various intelligent equipment; and
the control device (63) is configured to start an equipment control operation on the target intelligent equipment based on the control gesture after receiving the notification message sent by the data processing device (62).

10. The central control equipment according to claim 9, wherein the image acquisition device (61) is a structured light depth camera, the data processing device (62) is a Raspberry Pi host, and the control device (63) is a voice assistant.

11. The central control equipment according to claim 9 or 10, wherein position information of various intelligent equipment is pre-stored in the central control equipment.

12. The central control equipment according to any one of claims 9 to 11, wherein a depth image of each of various intelligent equipment is acquired in real time by the image acquisition device (61), and positional information of each intelligent equipment is determined based on the depth image of each intelligent equipment.

13. The central control equipment according to any one of claims 9 to 12, wherein the central control equipment is configured to determine a center point of the control gesture according to the depth image containing the control gesture, determine a centroid of each of various intelligent equipment according to the positional information of various intelligent equipment, and calculate an included angle between a spatial connection line connecting the center point of the control gesture with the centroid of each intelligent equipment and a plane where the control gesture is located, wherein the included angle represents the positional relationship.

14. The central control equipment according to any one of claims 9 to 13, wherein the preset condition comprises that an included angle between a spatial connection line connecting the control gesture with the target intelligent equipment and a plane where the control gesture is located is greater than a preset angle threshold.

15. A non-transitory computer-readable storage medium having stored therein an instruction that, when executed by a processor, performs steps of the control method according to any one of claims 1-5 or steps of the control method according to any one of claims 6-8.
